# EUROPÄISCHE PATENTANMELDUNG

(11) **EP 2 333 927 A2**
(43) Veröffentlichungstag der Anmeldung: **15.06.2011**
(21) Anmeldenummer: 10401185.3
(22) Anmeldetag: 09.11.2010
(51) Int. Cl.: H02J 3/38, F02G 5/00

(54) **Verfahren zur Nutzung von Elektroenergie in Stromversorgungsnetzen**

(30) Priorität: 09.11.2009 DE 102009052288
(71) Anmelder: Enders, Torsten, 09496 Marienberg (DE)
(72) Erfinder: Enders, Torsten, 09496 Marienberg (DE)
(74) Vertreter: Thomas, Matthias

(57) **Zusammenfassung**

Die Erfindung betrifft ein Verfahren zur Schwarmstromerzeugung und/oder Schwarmstromspeicherung, bei dem die Steuereinheiten streng wärmegeführter Erzeuger- und/oder Speichereinheiten von einer Steuerzentrale mit Informationen versorgt werden und aus diesen Informationen Entscheidungen für die nachgeordneten Einheiten ableiten, bei denen der Status angeschlossener Wärmespeicher höchste Priorität hat.

## Beschreibung

Die Erfindung betrifft ein Verfahren zur Nutzung von Elektroenergie in Stromversorgungsnetzen, bei dem eine Mehrzahl dezentral angeordneter Erzeuger- und/oder Speichereinheiten für Elektroenergie durch eine Steuerzentrale zusammengefasst und eine so genannte Schwarmstromversorgung organisiert wird.

Stromversorgungsnetze für Hoch- und Mittelspannung sind allgemein bekannt. Solcher Art Stromversorgungsnetze werden bekanntermaßen durch Kraftwerke hoher bis mittlerer Leistung, in den letzten Jahren auch durch Windkraftwerke und Solarstrom gespeist. Daraus entstehen wesentliche Nachteile.

Kern- und Wärmekraftwerke sind als so genannte Grundlastversorger auf Dauerbetrieb bei konstanter Leistungsabgabe angewiesen, da sie nur über größere Zeitspannen hinweg in ihren Leistungsparametern beeinflusst werden können. Spitzenlastkraftwerke, wie die bekannten Gasturbinenkraftwerke, brauchen immer noch mehrere Stunden vom Start bis zur Abgabe von Strom ins Stromnetz.

Wind- oder Solarkraftwerke wiederum sind direkt vom Vorhandensein der jeweiligen Primärenergie abhängig und stellen einen erheblichen Unsicherheitsfaktor für die Stromversorgung insgesamt dar.

Aus den oben genannten Nachteilen ergibt sich für die Energieversorgungsunternehmen die schwer zu lösende Aufgabe, an den tatsächlichen Verbrauch angepasste Versorgungszusagen zu machen und zugleich innerhalb der von ihnen betriebenen Stromnetze die zugesicherten technischen Parameter zuverlässig einzuhalten.

Um die notwendigen kurzen Reaktionszeiten erreichen zu können und kurzfristig auftretende Bedarfsschwankungen ausgleichen zu können, ist bereits vorgeschlagen worden, mit einer Anzahl zusammengeschalteter Blockheizkraftwerke (nachfolgend: BHKW) sogenannten Schwarmstrom zu erzeugen, wobei eine die Erzeugung regulierende Steuerzentrale den Start oder die Abschaltung der angeschlossenen BHKW direkt steuert. Diese Art der Steuerung, wie sie auch in DE 20 2008 016 967 U1 vorgeschlagen ist, hat wesentliche Nachteile. Die verbundenen BHKWs werden stromgeführt gesteuert und damit entsprechend dem aktuellen Strombedarf betrieben. Die üblicherweise bei BHKWs entstehende Abwärme, die allgemein zu Heizungs- oder Kühlungszwecken eingesetzt wird, steht in keiner Beziehung zum tatsächlichen Heizungs- bzw. Kühlungsbedarf am Aufstellungsort des BHKW. Dies hat zur Folge, dass zu große Wärmemengen durch Zwangskühlung vernichtet werden müssen mit den nachteiligen Folgen hinsichtlich des Wirkungsgrades solcher Einrichtungen und der Umwelt. Ein weiterer Nachteil dieser Art der Schwarmstromerzeugung besteht darin, dass zwar Strommengen erzeugt werden, jedoch keine Abnahme überschüssiger Strommengen aus dem Netz vorgesehen ist. Um diese Problematik administrativ zu lösen, wurden Netzbetreiber gesetzlich zur Abnahme dezentral erzeugter Strommengen verpflichtet.

Solcher Art BHKW sind bekannt. Es handelt sich dabei zumeist um mit Verbrennungsmotoren betriebene Gleichstrommaschinen, bei denen die anfallende Verlustwärme möglichst vollständig zurück gewonnen, möglicherweise gespeichert oder direkt für Heizzwecke bzw. zur Heizwassererwärmung eingesetzt wird. Solcher Art BHKW bieten gelegentlich auch die Möglichkeit, eine Eigenversorgung mit Strom sicherzustellen.

Um diese Situation zu ändern, ist in DE 102 61 171 B3 vorgeschlagen worden, BHKW streng wärmegeführt zu betreiben und für die Schwarmstromerzeugung einzusetzen. Über eine zentrale Steuereinheit soll eine endliche Anzahl solcher BHKW zusammengeschaltet werden und nach dem Master-Slave-Prinzip die benötigten Strommengen erzeugt werden. So soll sichergestellt werden, dass keine überschüssigen Wärmemengen erzeugt werden.

Durch das Kriterium der strengen Wärmeführung für das BHKW muss zunächst die Zahl der an der Schwarmstromerzeugung teilnehmenden BHKWs deutlich vergrößert werden. Versorgungssicherheit kann auf diese Weise jedoch nicht erreicht werden, da immer dann, wenn die Zahl aktivierbarer BHKWs zu gering ist, ein Missverhältnis zwischen Angebot und Nachfrage nach Strommengen bleibt.

Aus DE 33 41 891 A1 ist bekannt, dass BHKW auch mit Stromspeichereinheiten (Akkumulatoren) ausgestattet werden können. Dabei wird der Vorteil genutzt, dass die bei BHKW zumeist vorhandenen Gleichstrommaschinen erzeugte Strommengen direkt in Akkumulatorenbatterien einspeisen können. Zur Abgabe gespeicherter Strommengen bzw. zur Direkteinspeisung vom BHKW in Versorgungsnetze ist ein Wechselrichter vorgesehen.

Nach Sauer "Optionen zur Speicherung elektrischer Energie in Energieversorgungssystemen mit regenerativer Stromerzeugung" vom 24.10.2006 (RWTH Aachen, über de.wikipedia.org) sind Akkumulatoren in einem Leistungsbereich bis etwa 100 kW als Speichermedium für Speicherzeiten bis zu einem Monat gut geeignet (vgl. Abb. 16). Zugleich wird jedoch festgestellt, dass aus ökonomischen Gründen nur Bleiakkumulatoren für solche Stromspeicher in Frage kommen. Diese haben allerdings einen Gesamtwirkungsgrad zwischen 60 und 70 %. Das heißt, dass Speichervorgänge und Entladevorgänge jeweils einen Teil der Energie in Wärme umwandeln, die bei den bekannten Vorschlägen nicht genutzt wird.

Nach dem Vorschlag aus DE 33 41 891 A1 kann keine Speicherung aus dem Stromnetz ankommender Strommengen erfolgen. Es ist lediglich ein sogenannter Wechselrichter vorgesehen, der die Möglichkeit zur Einspeisung in das Stromnetz schafft. Dabei ist offen gelassen, wie das BHKW in Fällen betrieben werden kann, bei denen:
- ein Wärmebedarf besteht, der von einem angeschlossenen Wärmespeicher nicht zu 100 % gedeckt werden kann, der Netzbetreiber aber keinen erzeugten Strom abnimmt;
- im Versorgungsnetz ein Überangebot an Strom vorhanden ist und gleichzeitig ein Wärmebedarf besteht, das BHKW aber wegen des Überangebotes an Strom nicht gestartet werden kann,
- ein Eigenbedarf an Strom vorhanden ist, das BHKW kann aber wegen voll ausgelasteter Wärmespeicher nicht gestartet werden kann.

Um die bei einer solchen Anordnung vorhandene Komponenten auf geeignete Weise ansteuern zu können, ist in WO 2008/125 696 A2 eine Steuereinrichtung vorgeschlagen, die sowohl ein BHKW als auch angeschlossene Wärmespeicher und Akkumulatoren nach verschiedenen Gesichtspunkten steuern kann.

Bei den im Stand der Technik auffindbaren Lösungen bleibt unberücksichtigt, dass bei den auszuführenden Prozessen auch in einer Stromspeichereinheit erhebliche Wärmemengen erzeugt werden, die für die Gewinnung von Wärmeenergie nutzbar gemacht werden können. Dies ist der wesentlichste Nachteil aller im Stand der Technik vorhandener Anlagen.

Ferner berücksichtigen die im Stand der Technik aufgeführten Lösungen nicht, dass Angebot und Nachfrage von Elektroenergie zeitdeterminiert sehr stark schwanken. Zugleich werden Strommengen heute über so genannte Strombörsen gehandelt, woraus sich eine Möglichkeit ergibt, gegebenenfalls Überangebote an Strom durch Ankauf dem Netz zu entnehmen und diese Strommengen zwischenzuspeichern. Die dabei entstehende Verlustwärme wird nicht nutzbar gemacht.

Keine der im Stand der Technik angegebenen Lösungen schafft Voraussetzungen dafür, durch wechselseitige Schwarmstromerzeugung oder Schwarmstromspeicherung einen Ausgleich von Netzbelastungen zu erreichen.

Es ist deshalb Aufgabe der Erfindung, ein Verfahren zur Nutzung von Elektroenergie in Stromnetzen nach dem Prinzip der sogenannten Schwarmstromerzeugung oder Schwarmstromspeicherung unter Verwendung einer Mehrzahl von Erzeuger- und/oder Speichereinheiten für elektrische Energie vorzuschlagen, bei dem einerseits den Anforderungen der Stromnetzbetreiber entsprochen werden kann, andererseits alle Anforderungen der Nutzer der Erzeuger- und/oder Speichereinheiten hinsichtlich Nutzung von Strom oder Wärme berücksichtigt werden und beim Betrieb der Erzeuger- und/oder Speichereinheiten anfallende Wärmemengen umfassend genutzt werden. Es ist ferner Aufgabe der Erfindung, eine Anordnung und Vorrichtungen vorzuschlagen, die den Anforderungen des erfindungsgemäßen Verfahrens gerecht werden.

Diese oben stehende Aufgabe wird gelöst mit einem Verfahren zur Nutzung von Elektroenergie in Stromnetzen mit den Merkmalen des Patentanspruches 1. Nebengeordnete und Unteransprüche beschreiben selbstständig schutzfähige oder weiterentwickelte Ausführungsformen der Erfindung.

In der nachstehenden Beschreibung, den Ausführungsbeispielen und den Patentansprüchen werden die verwendeten Begriffe mit folgendem Bedeutungsinhalt verwendet, wobei die aufgeführten Definitionen zugleich Merkmale der Erfindung bestimmen:
Stromnetz - ist das Leitungssystem eines Netzbetreibers, durch das wenigstens je eine Versorgungsleitung zwischen einem Stromerzeuger und einem Stromverbraucher zur Verfügung steht. Zugleich ist dies ein Leitungssystem, in dem vorzugsweise ein Grundlast- und/oder ein vom Aufkommen an Primärenergie abhängiges Kraftwerk als Stromerzeuger angeschlossen ist.
Schwarmstromerzeugung - ist die Stromerzeugung durch Erzeuger- und/oder Speichereinheiten mit geringer Eigenleistung, wobei die Bereitstellung größerer Strommengen durch gemeinsamen Betrieb einer endlichen Zahl von Erzeuger- und/oder Speichereinheiten ermöglicht wird.
Erzeugereinheit - ist ein streng wärmegeführtes BHKW oder eine Stromspeichereinheit.
Stromspeichereinheit - ist eine Baueinheit, die überschüssige Strommengen aus dem Stromnetz oder von einem BHKW abnehmen und zwischenspeichern kann.
Steuerzentrale - ist eine hard- und/oder softwarebasierte, weitgehend automatisch arbeitende, Einheit, die in Abhängigkeit von einer augenblicklichen oder einer vorhersehbaren Bedarfslage zeitnah Statusanfragen an die verbundenen Erzeuger- und/oder Stromspeichereinheiten aussendet und in Auswertung der Statusantworten eine erforderliche Zahl von Erzeuger- und/oder Speichereinheiten aufruft, Strommengen in das Stromnetz einzuspeisen oder zu entnehmen und zu speichern.
Steuereinheit - ist eine hard- und/oder softwarebasierte, weitgehend automatisch arbeitende, Baueinheit, die den Status angeschlossener Komponenten verarbeiten und davon abgeleitet Steuersignale generieren kann, die Anfragesignale der Steuerzentrale entgegennehmen und beantworten kann und dabei die Statussignale angeschlossener Wärmespeicher mit höherer Priorität behandelt, als die Statussignale anderer angeschlossener Komponenten oder der Steuerzentrale.
Wärmespeichereinheit - ist eine Baueinheit, die die beim Betrieb eines BHKW oder einer Stromspeichereinheit entstehende Wärme aufnehmen und speichern kann.

Nach der Erfindung wird die Aufgabe gelöst durch ein Verfahren zur Nutzung von Elektroenergie in Stromversorgungsnetzen, bei dem eine große Anzahl von Erzeuger- und/oder Speichereinheiten mit dem Ziel einer sogenannten Schwarmstromerzeugung oder auch einer Schwarmstromspeicherung zusammengeschaltet werden und die gemeinsame Steuerung der zusammengeschalteten Einheiten mithilfe einer Steuerzentrale erfolgt, die Informationen der Betreiber von Stromnetzen über die Angebots- und Bedarfslage erhält, auswertet und diese in verarbeiteter Form an die Einheiten weitergibt. Die Nutzung von Elektroenergie in Stromversorgungsnetzen ist dabei so ausgestaltet, dass kurzzeitig vorhandene Bedarfsschwankungen und damit einhergehende Fehlbeträge oder Überschüsse an Strommengen erfasst und durch eine entsprechende Beeinflussung einer Mehrzahl miteinander verbundener Erzeuger- und/oder Speichereinheiten geregelt wird.

Die Einflussnahme erfolgt dabei auch unter dem Gesichtspunkt, dass bei einem Überangebot an Strom eine Abnahme von Strommengen aus dem Netz und Zwischenspeicherung möglich sein muss, um die technischen Parameter für den Netzbetrieb sicherstellen zu können.

Weiter berücksichtigt die Erfindung, dass aufgrund der ständig wechselnden Versorgungssituation vor allem tageszeitlich bedingt Strommengen mit unterschiedlichen Preisen gehandelt werden. Dabei wird der Zusammenhang berücksichtigt, dass Angebot und Preis der Strommengen stets eine gegenläufige Entwicklung haben. Das erfindungsgemäße Verfahren schafft eine Möglichkeit, die zeitlich bestimmten Schwankungen zu nutzen, um beispielsweise kostengünstig eingekaufte Strommengen zwischenzuspeichern und diese zeitversetzt zu höheren Preisen wieder in das Stromnetz einzuspeisen.

Nach der Erfindung sind die Steuereinheiten der Erzeuger- und/oder Speichereinheiten deshalb mit einer Steuerzentrale verbunden, durch die die Schwarmstromerzeugung oder -speicherung organisiert wird. Dabei werden bei Berücksichtigung einer strengen Wärmeführung ankommende Anfragen zeitnah mit Statusinformationen verglichen und gegebenenfalls die Abgabe oder Annahme von Strommengen verweigert. Die Steuerzentrale ist so ausgelegt, dass sie eingehende Verweigerungen auswertet und innerhalb des verbundenen Schwarmes von Erzeuger- und/oder Speichereinheiten zeitnah weitere anfragt, bis die erforderliche Erzeugungs- und/oder Speicherkapazität erreicht ist.

Weiter soll nach der Erfindung sichergestellt sein, dass die erfindungsgemäßen Erzeuger- und/oder Speichereinheiten bei den auszuführenden Prozessen keine Verlustwärme erzeugen, die ungenutzt bleibt.

Hierzu bevorzugt die Erfindung Erzeugereinheiten, die eine nahezu vollständige thermische Kapselung haben und auf einem niedrigen Temperaturniveau gehalten werden, wobei mit Wärmetauschern die zu einer Übertemperatur führenden Wärmemengen stets zurückgewonnen und in einem der Erzeugereinheit zugeordneten Wärmespeicher vorrätig gehalten werden. Dies gilt gleichermaßen für Speichereinheiten, die sich bei Lade- bzw. Entladevorgängen erwärmen können und in denen Gleich- bzw. Wechselrichter beim Betrieb Abwärme erzeugen.

Der der Erzeuger- und/oder Speichereinheit zugeordnete Wärmespeicher ist kapazitätsseitig so ausgelegt, dass er Verbraucher mit den benötigten Wärmemengen versorgen kann. Solche Verbraucher können beispielhaft Heizungsanlagen, Warmwasserversorgungssysteme, Klima- oder Kälteanlagen bzw. Wärmepumpen sein.

Die den Erzeuger- und/oder Speichereinheiten zugeordneten Steuereinheiten sind dazu in der Lage, diese streng wärmegeführt zu steuern.

Ferner ist das Steuerungsverfahren so ausgestaltet, dass der Füllungsgrad des Wärmespeichers und gegebenenfalls eine Prognose über die künftige Abnahme von Wärmemengen mit höchster Priorität berücksichtigt werden. Neben der vollständigen Erfassung und Speicherung angefallener Wärmeenergie wird somit sichergestellt, dass keine nicht verwendbaren (speicherbaren) Wärmemengen erzeugt werden und somit jede Form der Zwangskühlung ausgeschlossen ist.

Diese Ausgestaltung des Verfahrens hat den Vorteil, dass es ohne Inkaufnahme von Energieverlusten ausgeführt werden kann, dass ein Verbund einer großen Zahl von Erzeuger- und/oder Speichereinheiten geringer Leistung möglich ist und trotzdem durch den Verbund größere Strommengen zu erhalten sind.

Weiter kann durch den Einsatz von Stromspeichereinheiten die Reaktionszeit auf Bedarfsveränderungen gegenüber BHKW's weiter verkürzt werden. Während BHKW's eine wenn auch kurze Anlaufzeit bis zum Erreichen stabiler Arbeitsbedingungen benötigen, kann eine Speichereinheit sofort nach dem Zuschalten Strommengen liefern. Somit kann über die Schwarmstromspeicherung bei kürzesten Reaktionszeiten ein Ausgleich von Bedarfsschwankungen im Netz erfolgen. Ein weiterer Vorteil ergibt sich daraus, dass Strommengen günstig eingekauft, zwischengespeichert und zu erhöhten Preisen wieder verkauft werden können.

Bei den erfindungsgemäßen Erzeugereinheiten ist eine thermische Kapselung ausgeführt und alle Komponenten, von denen Wärmeverluste ausgehen können, befinden sich innerhalb der Kapselung. Durch ebenfalls integrierte Wärmetauscher werden die in der Baueinheit entstehenden Wärmemengen vollständig zurückgewonnen und in einem Wärmespeicher abgespeichert. Auf diese Weise ist es möglich, im Inneren der Kapselung eine Temperatur auf dem Niveau der Raumtemperatur zu halten, während die Temperatur im zugeordneten Wärmespeicher beispielsweise zum Betrieb einer angeschlossenen Heizungsanlage auf etwa 40°C eingestellt werden kann. Bei Erfordernis kann die Temperatur des Wärmespeichers auch höher ausgelegt sein, wobei dies letztlich eine Optimierungsaufgabe ist.

Weiter ist, um dem Grundsatz der strengen Wärmeführung entsprechen zu können, die Erzeugereinheit vorzugsweise mit einer Stromspeichereinheit kombiniert. Die Stromsspeichereinheit ist dabei gegenüber der installierten Leistung der Erzeugereinheit mehrfach überdimensioniert, wodurch ein stundenlanger wärmegeführter Betrieb der Erzeugereinheit möglich ist, ohne dass die Kapazität des Stromspeichers ausgelastet wird. Weiter kann die Restkapazität des Stromspeichers eingesetzt werden, um wie oben beschrieben Strommengen aus dem Stromnetz zu entnehmen, diese zwischenzuspeichern und zeitversetzt wieder abzugeben.

Eine Ausführungsform des erfindungsgemäßen Verfahrens benutzt ausschließlich Speichereinheiten, wobei deren Wärmeentwicklung bei Speicher- bzw. Entladevorgängen sowie bei der Wandlung von Wechsel- in Gleichstrom und umgekehrt zurückgewonnen wird. Auch in diesem Fall ist die konkrete Auslegung eine Optimierungsaufgabe.

Eine konkrete Auslegungsform einer Erzeugereinheit soll beispielhaft erläutert werden. Die Erzeugereinheit soll dabei eine Heizungsanlage eines Niedrigenergiehauses versorgen und die installierte Wärmeleistung soll bei 2,4 kW die installierte elektrische Leistung bei 1,6 kW liegen. Die installierte Speichereinheit soll eine installierte Leistung von wenigstens 16 kW haben. Mithin könnte das BHKW wenigstens 10 Stunden ununterbrochen in Betrieb sein, um den Stromspeicher zu 100 % auszulasten. Tatsächlich würde dies jedoch den Wärmebedarf des Niedrigenergiehauses weit übersteigen und aufgrund der strengen Wärmeführung der Erzeugereinheit und der vollständigen Wärmerückgewinnung aus Erzeuger- und/oder Speichereinheit wird eine vorzeitige Abschaltung der Erzeugereinheit erfolgen. Die Restkapazität der Speichereinheit steht sodann für die oben beschriebenen Zwischenspeicherungsvorgänge zur Verfügung.

Die Erfindung wird nachstehend anhand einiger Ausführungsbeispiele und Zeichnungen näher erläutert. Dabei zeigen:

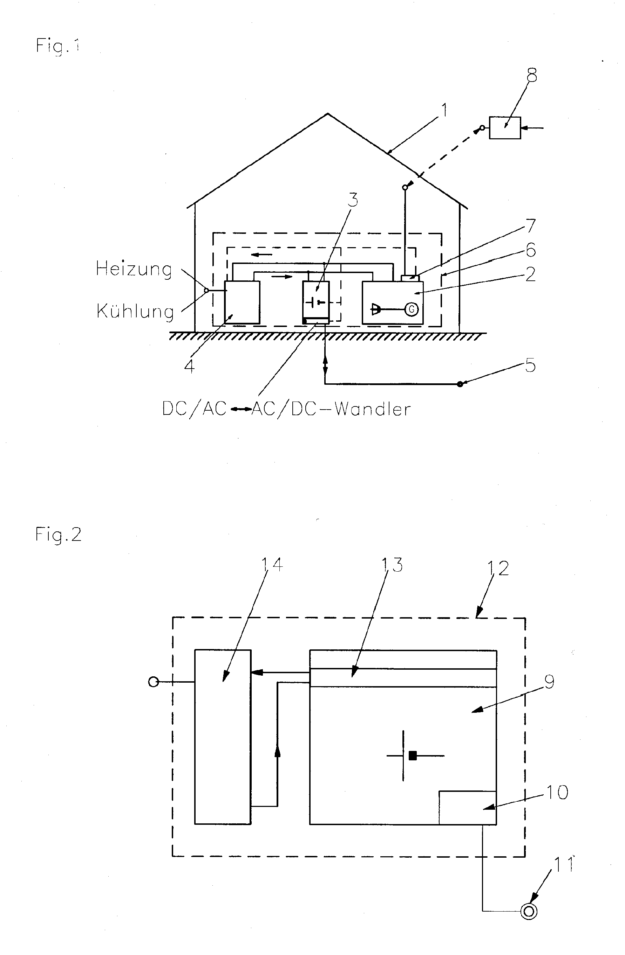

- Fig. 1 -: die Darstellung einer Anordnung einer kombinierten Energieerzeu- gungs- und Speichereinheit mit einem an diese angeschlossenen Wärmespeicher.
- Fig. 2 -: eine Anordnung einer Speichereinheit mit einem zugeordneten Wär- mespeicher.

In einem Gebäude 1 ist eine Energieerzeugungseinheit aufgestellt, die aus einem BHKW 2, einem dem BHKW zugeordneten Stromspeicher 3 und einem beiden zugeordneten Wärmespeicher 4 besteht. Vom BHKW 2 bzw. vom Stromspeicher 3 besteht eine Verbindung zum Stromnetz 5. BHKW 2 und Stromspeicher 3 sind gekapselt, sodass innerhalb der Kapselung 6 entstehende Wärme zurückgewonnen und im Wärmespeicher 4 gespeichert werden kann.

Eine Steuereinheit 7 verbindet BHKW 2, Stromspeicher 3 und Wärmespeicher 4 so miteinander, dass sie den Status der angeschlossenen Einrichtungen jederzeit erfassen kann. Die Steuereinheit 7 ist so ausgelegt, dass sie die Anordnung streng wärmegeführt steuert.

Von der Steuereinheit 7 besteht eine Verbindung zu einer Steuerzentrale 8, wobei es auf die Art dieser Verbindung nicht ankommt. Von der Steuerzentrale 8 erhält die Steuereinheit 7 Anfragen, die sie durch Vergleich mit dem Status der gesteuerten Komponenten auswertet und beantwortet. Dabei werden die Statusabfragen des BHKW 2 und des Stromspeichers 3 mit mittlerer, die des Wärmespeichers 4 mit höchster Priorität ausgewertet. Die Anfrage der Steuerzentrale 8 hat eine niedere Priorität.

Bei Eingehen einer Anfrage seitens der Steuerzentrale 8 wertet die Steuereinheit 7 zeitnah alle vorliegenden Informationen aus und sendet gegebenenfalls ein Bestätigungs- oder ein die Anfrage ablehnendes Signal an die Steuerzentrale 8.

Geht bei der Steuerzentrale 8 ein Bestätigungssignal ein, generiert diese wiederum ein Bestätigungssignal an die Steuereinheit 7, die daraufhin entsprechend dem Status der angeschlossenen Komponenten den Stromsspeicher 3, das BHKW 2 startet oder beide aktiviert. Verneint die Steuereinheit 7 hingegen die Bereitschaft, fragt die Steuerzentrale 8 weitere verbundene Einrichtungen gleicher Art an, ob bei diesen eine Verwendungsmöglichkeit besteht. Dieser Ablauf wird solange wiederholt, bis eine ausreichende Anzahl verbundener Einrichtungen Bereitschaft signalisiert hat, gestartet werden konnte, und die gestellte Aufgabe (Stromerzeugung und/oder -speicherung) erfüllt werden kann.

Auf die oben beschriebene Weise kann auch eine Anordnung arbeiten, bei der ausschließlich ein Stromspeicher 9 zum Einsatz kommt. Dieser ist über einen Gleich- und/oder Wechselrichter 10 mit dem Netz 11 verbunden. Stromspeicher 9 und Gleich- und/oder Wechselrichter 10 befinden sich innerhalb einer Kapselung 12, wobei dort aufgrund thermischer Prozesse erwärmte Luft mit einem Wärmetauscher 13 gekühlt und die frei werdenden Wärmemengen einem Wärmespeicher 14 zugeführt werden können.

Die so ausgeführte Anlage bedarf keiner Primärenergie. Sie arbeitet ausschließlich unter Berücksichtigung zeitabhängiger Überangebote bzw. Defizite in der Versorgung mit Elektroenergie. Die bei Speicherung bzw. Entladung des Stromspeichers 9 entstehenden Wärmemengen können beispielsweise für Heiz- und/oder Kühlzwecke sowie für die Warmwasserbereitstellung genutzt werden.

Die Erfindung hat also den Vorteil, dass sie es ermöglicht, Energie mittels BHKW zu erzeugen, mittels Stromspeicher zwischenzuspeichern, Energie von einem angeschlossenen Netz zu entnehmen und zwischenzuspeichern oder vom Speicher Energie ins Netz einzuspeisen, wobei eine Mehrzahl solcher Anlagen im Verbund als so genannte Schwarmstromerzeugung arbeiten und aufgrund strenger Wärmeführung und Kapselung der eingesetzten Baueinheiten Energieverluste vermieden werden.

### Bezugszeichenliste

- 1: Gebäude
- 2: BHKW
- 3: Stromspeicher
- 4: Wärmespeicher
- 5: Stromnetz
- 6: Kapselung
- 7: Steuereinheit
- 8: Steuerzentrale
- 9: Stromspeicher
- 10: Gleich- und/oder Wechselrichter
- 11: Stromnetz
- 12: Kapselung
- 13: Wärmetauscher
- 14: Wärmespeicher

## Patentansprüche

1. Verfahren zur Nutzung von Elektroenergie in Stromversorgungsnetzen durch Schwarmstromerzeugung und/oder Schwarmstromspeicherung, bei dem
Einheiten, die Strom erzeugen oder speichern können, in der Form einer Motor-Generator-Anordnung, eines Blockheizkraftwerkes (BHKW), einer Gleichrichter-/Wechselrichter-Einheit, eines Akkumulators oder einer Akkumulatorbatterie verwendet werden,
die Einheiten jeweils durch eine diesen zugeordnete Steuereinheit (7) gesteuert werden, die mit einer übergeordneten Steuerzentrale (8) verbunden sind, Signale zum Status an die Einheiten angeschlossener Wärmespeicher mit hoher Priorität behandeln und Anfragen der übergeordneten Steuerzentrale (8) dann abweisen, wenn durch eine Inbetriebnahme der Einheit gegen die Vorgaben zur Wärmeführung verstoßen wird,
die übergeordnete Steuerzentrale (8) mit einer endlichen Zahl solcher Einheiten verbunden ist und die Einheiten aufgrund von Anfragen der übergeordneten Steuerzentrale (8) Strommengen erzeugen und/oder speichern,
die übergeordnete Steuerzentrale (8) von den Einheiten Statusinformationen erhalten kann und an die Einheiten Steuerbefehle senden kann, die von diesen mit niedriger Prioritätsstufe (Anfragestatus) behandelt werden,
wobei die übergeordnete Steuerzentrale (8) bei Eingang einer abweisenden Information von einer angefragten Einheit wenigstens eine weitere Einheit anfragt und solange Anfragen vornimmt, bis sie von einer ausreichenden Anzahl derselben Stromliefer- und/oder Stromabnahmezusagen erhalten hat und nachfolgend ein Bestätigungssignal an diese aussendet, das die Steuereinheiten (7) der bestätigten Einheiten als Startsignal interpretieren und diese starten,
wobei die Einheiten von den zugeordneten Steuereinheiten (7) streng wärmegeführt gesteuert werden,
**dadurch gekennzeichnet, dass**
die von einer Gleichrichter-/Wechselrichter-Einheit und/oder die von einer Stromspeichereinheit über Austauschprozesse zurück gewonnenen Wärmemengen einem Wärmespeicher (4; 14) zugeführt und in der Wärmebilanz der Einheit berücksichtigt werden.

2. Verfahren zur Nutzung von Elektroenergie in Stromversorgungsnetzen nach Anspruch 1,
**dadurch gekennzeichnet, dass**
die Steuereinheit (7) einer an ein Stromnetz angeschlossenen Erzeuger- und/oder Speichereinheit über Daten verfügt, die den Status gespeicherter Wärmemengen und/oder eine dynamische Abnahmeprognose für gespeicherte und/oder zu erzeugende Wärmemengen ermöglicht
und Bestätigungszusagen an die Steuerzentrale (8) nur dann gibt, wenn die Statusabfrage und/oder die Abnahmeprognose eine Inbetriebnahme der nachgeordneten Erzeuger- und/oder Speichereinheit zulassen.

3. Verfahren zur Nutzung von Elektroenergie in Stromversorgungsnetzen nach einem der Ansprüche 1 oder 2,
**dadurch gekennzeichnet, dass**
die Steuereinheit (7) den Status des Wärmespeichers (4; 14) mit hoher Priorität, den Status der Erzeugereinheit (2) und/oder der Stromspeicher (3; 9) mit normaler Priorität und Statusanfragen der Steuerzentrale (8) mit niedriger Priorität bearbeitet
und Bestätigungszusagen an die Steuerzentrale (8) nur dann gibt, wenn die Statusabfrage des Wärmespeichers (4; 14) und/oder eine Wärmeverbrauchsprognose eine Inbetriebnahme der nachgeordneten Erzeuger- und/oder Speichereinheit zulässt.

4. Verfahren zur Nutzung von Elektroenergie in Stromversorgungsnetzen nach einem der Ansprüche 1 bis 3,
**dadurch gekennzeichnet, dass**
die Wärmespeicher (4; 14) nach dem Wärmebedarf nachgeordneter Verbraucher ausgelegt sind.

5. Verfahren zur Nutzung von Elektroenergie in Stromversorgungsnetzen nach einem der Ansprüche 1 bis 4,
**dadurch gekennzeichnet, dass**
die Steuereinheit (7) einen angeschlossenen Stromspeicher (3; 9) ansteuert und derselbe zumindest zeitweise Strommengen dem Stromnetz (11) entnehmen, diese zwischenspeichern, bei Bedarf wieder an das Stromnetz (11) abgeben kann
und die bei den Speicher- oder Entladevorgängen entstehenden Wärmemengen Wärmespeichern (4; 14) zugeführt werden.

6. Verfahren zur Nutzung von Elektroenergie in Stromversorgungsnetzen nach einem der Ansprüche 1 bis 5,
**dadurch gekennzeichnet, dass**
die Temperatur im Wärmespeicher (4; 14) unter 50°C liegt.

7. Verfahren zur Nutzung von Elektroenergie in Stromversorgungsnetzen nach einem der Ansprüche 1 bis 6,
**dadurch gekennzeichnet, dass**
die Wärmegewinnung mit Hilfe von Wärmetauschern erfolgt, die innerhalb der Kapselung (6; 12) oder innerhalb einer Steuereinheit (7) oder innerhalb eines Gleich- und/oder Wechselrichters (10) oder innerhalb eines Stromspeichers (3; 9) anfallende Wärmemengen gewinnen und über ein strömendes Medium einen Wärmespeicher (4; 14) zuführen.

8. Einrichtung zur Durchführung des Verfahrens nach einem der Ansprüche 1 bis 7,
**dadurch gekennzeichnet, dass**
die Schwarmstrom erzeugende Einheit ein BHKW (2) oder ein Stromspeicher (3; 9),
die Schwarmstrom beziehende Einheit ein Stromspeicher (3; 9) ist
und die gewinnbare Wärme des BHKW (2), des Stromspeichers (3; 9), der Steuereinheit (7) und des Gleich- oder Wechselrichters (10) in einem Wärmespeicher (4; 14) gespeichert ist.

9. Verwendung einer Einrichtung nach Anspruch 8, zur Stromerzeugung und/oder zur Speicherung von Strommengen.

10. Verwendung einer Einrichtung nach Anspruch 8, zur Stromerzeugung und/oder zur Speicherung von Strommengen im Verbund mit einer endlich begrenzten Zahl gleichartiger Einrichtungen und/oder BHKW's.
